# EUROPÄISCHE PATENTANMELDUNG

(11) **EP 4 379 234 A1**
(43) Veröffentlichungstag der Anmeldung: **05.06.2024**
(21) Anmeldenummer: 23199364.3
(22) Anmeldetag: 25.09.2023
(51) Int. Cl.: F16F 9/36, F16J 9/28, F16J 15/16

(54) **KOLBEN-ZYLINDER-ANORDNUNG, VORZUGSWEISE FÜR EIN FAHRZEUG**

(30) Priorität: 12.10.2022 DE 102022126541
(71) Anmelder: ZF CV Systems Europe BV, 1170 Brüssel (BE)
(72) Erfinder: SIEKER, Armin, 33611 Bielefeld (DE); PETERS, Andreas, 31683 Obernkirchen (DE); KAUFMANN, Michael, 30989 Gehrden (DE)
(74) Vertreter: Ohlendorf, Henrike

(57) **Zusammenfassung**

Die Erfindung betrifft eine Kolben-Zylinder-Anordnung, insbesondere für ein Fahrzeug, umfassend einen in einem Zylinder (2) axial beweglich gelagerten Kolben (5), welcher an seinem Außenumfang von einer Dichtung (8) umgeben ist, die gegen den Zylinder (2) gepresst ist. Bei einer Kolben-Zylinder-Anordnung, welche trotz unterschiedlicher Temperaturen immer eine geschlossene Dichtlinie zwischen Kolben und Zylinder gewährleistet, besteht die Dichtung (8) aus mindestens zwei Dichtelementen (8a, 8b), welche in radialer Richtung nebeneinander liegend, aneinander angrenzend angeordnet sind, wobei die wenigstens zwei Dichtelemente (8a, 8b) aus verschiedenen Materialen bestehen, welche unterschiedliche, von der Temperatur abhängige Elastizitätseigenschaften aufweisen.

## Beschreibung

Die Erfindung betrifft eine Kolben-Zylinder-Anordnung, vorzugsweise für ein Fahrzeug, umfassend einen in einem Zylinder axial beweglich gelagerten Kolben, welcher an seinem Außenumfang von einer Dichtung umgeben ist, die gegen den Zylinder gepresst ist.

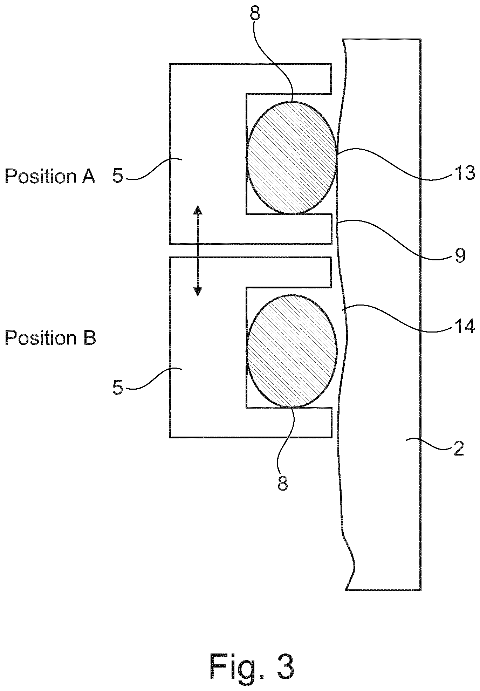

Es sind eine Vielzahl von Kolben-Zylinder-Anordnungen bekannt, die vorzugsweise in Fahrzeugen eingesetzt werden. Solche Kolben-Zylinder-Anordnungen weisen einen Zylinder auf, in welchem ein Kolben axial beweglich gelagert ist. Am Außenumfang des Kolbens erstreckt sich eine Dichtung, die gegen den Zylinder gepresst ist. In Abhängigkeit von Steuersignalen wird der Kolben in dem Zylinder verfahren, um beispielsweise eine Kupplung oder eine Bremse eines Fahrzeuges zu betätigen. Als Material für solche dynamisch belasteten Dichtungen werden Werkstoffe eingesetzt, welche insbesondere bei tiefen Temperaturen in ihrer Elastizität nachlassen. Kostengünstig hergestellte Zylinderkörper wie beispielhaft in Fig. 3 dargestellt, sind in der Zylinderöffnung nicht vollständig eben ausgebildet und weisen an einer dem Kolben gegenüberliegenden Innenwandung Einfallsstellen 11 auf. In einer ersten Position A des Kolbens 5 ist die Dichtung 8 ausreichend verpresst und bildet mit der Innenwandung 9 des Zylinders 2 eine geschlossene Dichtlinie 13. Bei einer weiteren Bewegung des Kolbens 5 entlang des Zylinders 2 wird eine Position B erreicht, an welcher die Dichtung 8 mit dem Zylinder 2 einen Leckagespalt 14 bildet. Bei einer mangelnden Elastizität des Materials der Dichtung 8 kann dieser Leckagespalt 14 nicht oder nur verzögert geschlossen werden. Dies führt zu Undichtigkeiten in diesem Bereich, welche Fehlfunktionen verursachen und im Fahrzeug zu verkehrskritischen Situationen führen können.

Der Erfindung liegt die Aufgabe zugrunde, eine Kolben-Zylinder-Einheit anzugeben, welche trotz unterschiedlichen Temperaturen immer eine geschlossenen Dichtlinie zwischen Kolben und Zylinder gewährleistet.

Die Aufgabe wird durch den Gegenstand des Patentanspruchs 1 gelöst.

Die Aufgabe ist insbesondere durch eine Kolben-Zylinder-Anordnung, insbesondere für ein Fahrzeug, umfassend einen in einem Zylinder axial beweglich gelagerten Kolben, welcher an seinem Außenumfang von einer Dichtung umgeben ist, die gegen den Zylinder gepresst ist, gelöst. Die Dichtung weist dabei zwei Dichtelemente, ein erstes Dichtelement und ein zweites Dichtelement, auf, welche in radialer Richtung nebeneinander liegend, aneinander angrenzend angeordnet sind, wobei die Dichtelemente aus verschiedenen Materialen bestehen, welche unterschiedliche, von der Temperatur abhängige Elastizitätseigenschaften aufweisen. Die Kolben-Zylinder-Anordnung weist bei jeder Temperatur ein ausreichendes Relaxationsverhalten der Dichtung zur Gewährleistung einer geschlossenen Dichtlinie des Kolbens mit der Innenwandung des Zylinders auf, da die Materialen der beiden Dichtelemente Elastizitätsschwankungen gegenseitig kompensieren. Dadurch wird auch bei unebenen Innenwänden des Zylinders während der Bewegung des Kolbens innerhalb des weniger präzise, insbesondere durch Abformung, hergestellten Zylinders in jeder Position des Kolbens eine geschlossene Dichtlinie gewährleistet. Dieser Vorteil wird auch beim Einsatz von konventionellen Dichtmaterialen in der Kolben-Zylinder-Anordnung gewährleistet. Insbesondere werden Fehlfunktionen und somit verkehrskritische Situationen bei einem Fahrzeug zuverlässig vermieden, obwohl die Kolben-Zylinder-Anordnung einen kostengünstigen Aufbau aufweist.

In einer Weiterbildung verbessern sich in einem vorgegebenen Temperaturbereich die Elastizitätseigenschaften des Materials des einen Dichtelementes, während im selben Temperaturbereich die Elastizitätseigenschaften des Materials des anderen Dichtelementes nachlassen. Dabei soll dass sich die Elastizitätseigenschaften verbessern bedeuten, dass das Dichtelement elastischer wird, und dass die Elastizitätseigenschaften des Dichtelements nachlassen soll bedeuten, dass das Dichtelement weniger elastisch wird. Durch dieses inverse Verhalten der Elastizitätseigenschaften der Materialen der beiden Dichtelemente wird ein Ausgleich der Elastizitätseigenschaften gewährleistet, indem das ungenügende Relaxationsverhalten des Materials des einen Dichtelementes durch das bessere Relaxationsverhalten des Materials des anderen Dichtelementes ausgeglichen wird.

In einer weiteren Weiterbildung besteht das erste Dichtelement aus einem Material, dessen Elastizitätseigenschaften bei tiefen, insbesondere Minus-Temperaturen, annähernd konstant bleiben oder sich verbessern, während das zweite Dichtelement aus einem Material gebildet ist, dessen Elastizitätseigenschaften bei Minus-Temperaturen nachlassen. Minus-Temperaturen sind dabei solche Temperaturen, die in Grad Celsius gemessen negative Werte aufweisen. Durch die Beibehaltung der Elastizität des Materials des ersten Dichtelements bei Minus-Temperaturen, insbesondere bei -20°C bis -50°C, ist das erste Dichtelement in der Lage, das eine nachlassende Elastizität aufweisende zweite Dichtelement gegen die Innenwandung des Zylinders zu pressen.

In einer weiteren Weiterbildung ist das für das erste Dichtelement verwendete Material für eine statische Belastung und das für das zweite Dichtelement verwendete Material für eine dynamische Belastung ausgebildet. Die Beschränkung der Eigenschaften des ersten Dichtelementes auf nur statische Belastungen erlaubt eine weitere Reduzierung der Herstellungskosten der Kolben-Zylinder-Anordnung.

In einer weiteren Weiterbildung sind die in radialer Kolbenrichtung angeordneten wenigstens zwei Dichtelemente in einer Dichtungsaufnahme positioniert, wobei ein Dichtelement vollständig von der Dichtungsaufnahme aufgenommen ist und das angrenzende weitere Dichtelement die Dichtungsaufnahme teilweise überragt und gegen den Zylinder gepresst ist. Da das erste Dichtelement vollständig in der Dichtungsaufnahme angeordnet ist, wird es lediglich statisch beansprucht, da das zweite Dichtelement innerhalb der Dichtungsaufnahme auf dem ersten Dichtelement aufsitzt. Ein Kontakt des ersten Dichtungselementes mit der Innenwandung des Zylinders wird somit zuverlässig unterbunden.

In einer weiteren Weiterbildung ist die Dichtungsaufnahme als Nut ausgebildet, in deren Nutgrund das das Material mit annähernd konstanten oder sich verbessernden Elastizitätseigenschaften aufweisende Dichtelement aufliegt und die aus dem Material mit nachlassenden Elastizitätseigenschaften bestehende Dichtelement die Nut in radialer Kolbenrichtung teilweise überragt. Die Nut bildet eine Führung für die aus mindestens zwei Dichtelementen bestehende Dichtung während der Bewegung des Kolbens entlang dem Zylinder und verhindert ein Ablösen der Dichtelemente aus dem Kolben während der dynamischen Beanspruchung.

In einer weiteren Weiterbildung weist das Material des die Dichtungsaufnahme teilweise überragenden Dichtelements eine hohe Verschleißfestigkeit und/oder eine hohe Schnittfestigkeit auf. Der Verschleiß des zweiten Dichtelementes durch die dynamische Beanspruchung an der Zylinderwandung bei der Bewegung des Kolbens wird reduziert, wodurch die Lebensdauer der Dichtung verlängert wird.

In einer weiteren Weiterbildung greifen die Dichtelemente in radialer Richtung formschlüssig ineinander und sind in der Dichtungsaufnahme verpresst. Der Formschluss zwischen den beiden Dichtungselementen verhindert, dass das zweite Dichtungselement während der dynamischen Belastung durch wirkende Scherkräfte aus der Dichtungsaufnahme herausgedrückt wird.

In einer weiteren Weiterbildung ist der Kolben federbelastet. Da der Kolben durch eine Stellkraft, welche von einem hydraulischen oder pneumatischen Medium aufgebracht wird, in Bewegung versetzt wird, gewährleistet die Feder eine zuverlässige Rückstellung des Kolbens beim Nachlassen der Stellkraft in seine Ausgangsposition.

In einer weiteren Weiterbildung ist die Kolben-Zylinder-Anordnung Bestandteil eines Kupplungs- oder Bremsaktors oder eines Dämpferbeins des Fahrzeuges. Eine solche Kolben-Zylinder-Anordnung bietet eine Vielfalt von Einsatzmöglichkeiten und ist nicht auf die Anwendung in einem Fahrzeug beschränkt.

Die Erfindung lässt zahlreiche Ausführungsmöglichkeiten zu. Eine davon soll anhand der in der Zeichnung dargestellten Figuren näher erläutert werden.

Es zeigen:
- Fig. 1: ein Ausführungsbeispiel eines Fahrzeugaktors mit der erfindungsgemäßen Kolben-Zylinder-Anordnung,
- Fig. 2: ein Ausführungsbeispiel der erfindungsgemäßen Kolben-Zylinder-Anordnung,
- Fig. 3: ein Ausführungsbeispiel einer Kolben-Zylinder-Anordnung nach dem Stand der Technik.

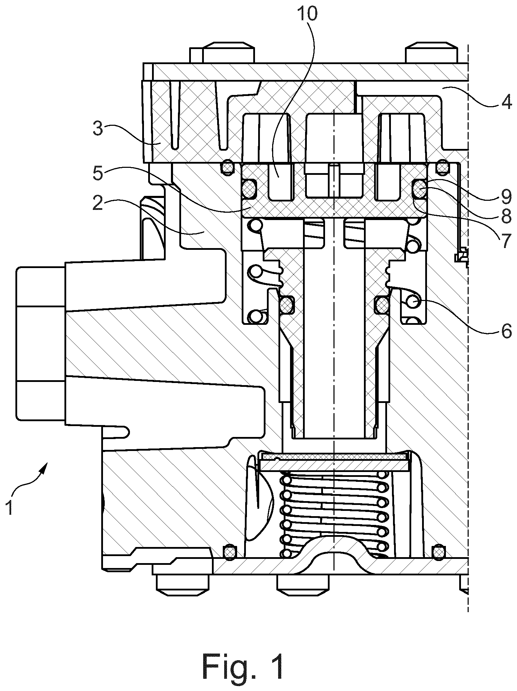

In Fig. 1 ist ein Ausführungsbeispiel für einen mit einem hydraulischen oder pneumatischen Medium betriebenen Aktor für ein Fahrzeug, beispielsweise einen Bremsaktor, dargestellt. Der Aktor 1 umfasst einen Zylinder 2, der gleichzeitig als Gehäuse des Aktors 1 ausgebildet ist und mit einer Abdeckung 3 versehen ist, welche einen Medienzufluss 4 aufweist. Innerhalb des Zylinders 2 ist ein Kolben 5 axial beweglich gelagert, welcher mit einem Federelement 6 gegen die Abdeckung 3 vorgespannt ist. Am Außenumfang des Kolbens 5 erstreckt sich eine in einer radialen Richtung des Kolbens 5 erstreckende Nut 7, in welcher eine Dichtung 8 positioniert ist, welche gegen die Innenwandung 9 des Zylinders 2 gepresst ist.

Zwischen dem Kolben 5 und dem Medienzufluss 4 ist eine Druckkammer 10 ausgebildet, in welche das durch den Medienzufluss 4 transportierte Medium einfließt. Mit der Menge des Mediums in der Druckkammer 10 ändert sich der auf dem Kolben 5 wirkende Druck. Wird eine vorgegebene Druckhöhe erreicht, bewegt sich der Kolben 5 entgegen der Federkraft des Federelementes 6 innerhalb des Zylinders 2 nach unten, wodurch eine Fahrzeugfunktion, beispielsweise eine Bremsfunktion, ausgelöst wird. Lässt der durch das Medium in der Druckkammer 10 ausgebildete Druck nach, wird der Kolben 5 durch das Federelement 6 in die entgegengesetzte Richtung innerhalb des Zylinders 2 verfahren, wodurch die Fahrzeugfunktion beendet wird.

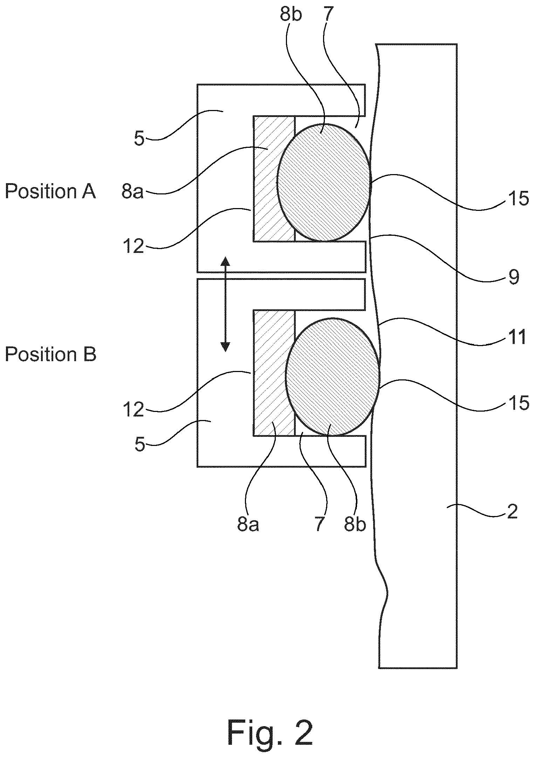

Fig. 2 zeigt einen Ausschnitt aus der erfindungsgemäßen Kolben-Zylinder-Anordnung, welche der Übersichtlichkeit halber auf die Darstellung der Nut 7 des Kolbens 5 beschränkt ist. In der Nut 7 ist die Dichtung 8 eingepresst. Da die Innenwandung 9 des Zylinders 2 uneben ausgebildet ist und Einfallsstellen 11 aufweist, besteht zur durchgehenden Einstellung einer geschlossenen Dichtlinie 15 über den gesamten Weg des Kolbens 5 an der Innenwandung 9 des Zylinders 2 die Dichtung 8 aus zwei radial aneinander angrenzenden Dichtelementen 8a, 8b. Die Dichtelemente 8a, 8b bestehen aus unterschiedlichen Materialen, welche in einem Temperaturbereich zwischen -20°C und -50°C verschiedene

Elastizitätseigenschaften aufweisen. Das direkt auf dem Nutgrund 12 angeordnete Dichtelement 8a besteht aus Silikon. Das zweite Dichtelement 8b, welches in radialer Kolbenrichtung nach außen anschließt, ist aus einem konventionellen Material, beispielsweise Nitrilkautschuk, ausgebildet. Die beiden Dichtelemente 8a, 8b sind so in der Nut 7 verpresst, dass das erste Dichtelement 8a aus Silikon vollständig von der Nut 7 umgeben ist, während das daran angrenzende aus dem konventionellen Material bestehende zweite Dichtelement 8b die Nut 7 teilweise überragt. Bei der Bewegung des Kolbens 5 reibt das zweite Dichtelement 8b an der Innenwandung 9 des Zylinders 2 und wird dynamisch beansprucht. Deshalb kann es bessere Eigenschaften hinsichtlich Verschleißfestigkeit bzw. Schnittfestigkeit aufweisen als das erste Dichtelement 8a, welches aufgrund seiner Anordnung nur statisch beansprucht wird.

Das aus Silikon bestehende erste Dichtelement 8a behält bei Minus-Temperaturen annähernd seine Elastizität, während die Elastizität des aus dem konventionellen Material bestehenden zweiten Dichtelements 8b in diesem Temperaturbereich nachlässt. In der Position A des Kolbens 5 (Fig. 2) ist die Kombination der beiden Dichtelemente 8a, 8b ausreichend verpresst und bildet eine geschlossene Dichtlinie 15 mit der Innenwandung 9 des Zylinders 2. Verfährt der Kolben 5 nun in die Position B, die sich im Bereich einer Einfallstelle 11 des Zylinders 2 befindet, presst das bei tiefen Temperaturen von -40°C noch sehr flexible, aus Silikon bestehende erste Dichtelement 8a gegen das zweite Dichtelement 8b, dessen Elastizität in diesem Temperaturbereich nachlässt. Dadurch wird das Elastizitätsverhalten des zweiten Dichtelementes 8b durch das Elastizitätsverhalten des ersten Dichtelementes 8a kompensiert. Die so gebildete Dichtung 8 wird auch an der Position der Einfallsstelle 11 gegen die Innenwandung 9 des Zylinders 2 gedrückt, wodurch ein Leckagespalt sicher vermieden und eine geschlossene Dichtlinie 15 erzeugt wird.

### Bezugszeichenliste (Teil der Beschreibung):

- 1: Aktor
- 2: Zylinder
- 3: Abdeckung
- 4: Medienzufluss
- 5: Kolben
- 6: Federelement
- 7: Nut
- 8: Dichtung
- 8a: Dichtelement
- 8b: Dichtelement
- 9: Innenwandung
- 10: erste Druckkammer
- 11: Einfallstelle der Innenwandung des Zylinders
- 12: Nutgrund
- 13: Dichtlinie
- 14: Leckagespalt
- 15: geschlossene Dichtlinie

## Patentansprüche

1. Kolben-Zylinder-Anordnung, insbesondere für ein Fahrzeug, umfassend einen in einem Zylinder (2) axial beweglich gelagerten Kolben (5), welcher an seinem Außenumfang von einer Dichtung (8) umgeben ist, die gegen den Zylinder (2) gepresst ist, **dadurch gekennzeichnet, dass** die Dichtung (8) ein erstes Dichtelement (8a) und ein zweites Dichtelement (8b) aufweist, welche in radialer Richtung nebeneinander liegend, aneinander angrenzend angeordnet sind, wobei das erste und das zweite Dichtelement (8a, 8b) aus verschiedenen Materialen bestehen, welche unterschiedliche, von der Temperatur abhängige Elastizitätseigenschaften aufweisen.

2. Kolben-Zylinder-Anordnung nach Anspruch 1, **dadurch gekennzeichnet, dass** sich in einem vorgegebenen Temperaturbereich die Elastizitätseigenschaften des Materials des ersten Dichtelementes (8a) verbessern, während im selben Temperaturbereich die Elastizitätseigenschaften des Materials des zweiten Dichtelementes (8b) nachlassen.

3. Kolben-Zylinder-Anordnung nach Anspruch 1 oder 2, **dadurch gekennzeichnet, dass** das erste Dichtelement (8a) aus einem Material besteht, dessen Elastizitätseigenschaften bei tiefen, vorzugsweise Minus-Temperaturen, annähernd konstant bleiben oder sich verbessern, während das zweite Dichtelement (8b) aus einem Material gebildet ist, dessen Elastizitätseigenschaften bei Minus-Temperaturen nachlassen.

4. Kolben-Zylinder-Anordnung nach Anspruch 1, 2 oder 3, **dadurch gekennzeichnet, dass** das für das erste Dichtelement (8a) verwendete Material für eine statische Belastung und das für das zweite Dichtelement (8b) verwendete Material für eine dynamische Belastung ausgebildet ist.

5. Kolben-Zylinder-Anordnung nach mindestens einem der vorhergehenden Ansprüche, **dadurch gekennzeichnet, dass** die in radialer Kolbenrichtung angeordneten zwei Dichtelemente (8a, 8b) in einer Dichtungsaufnahme (7) positioniert sind, wobei eines der Dichtelemente (8a, 8b) vollständig in der Dichtungsaufnahme aufgenommen ist und das angrenzende weitere Dichtelement (8a, 8b) die Dichtungsaufnahme (7) teilweise überragt und gegen den Zylinder (2) gepresst ist.

6. Kolben-Zylinder-Anordnung nach mindestens einem der vorhergehenden Ansprüche **dadurch gekennzeichnet, dass** die Dichtungsaufnahme als Nut (7) ausgebildet ist, in deren Nutgrund (12) das aus dem Material mit annähernd konstanten oder sich verbessernden Elastizitätseigenschaften gebildete erste Dichtelement (8a) aufliegt und das aus dem Material mit nachlassenden Elastizitätseigenschaften bestehende zweite Dichtungselement (8b) die Nut (7) in radialer Kolbenrichtung teilweise überragt.

7. Kolben-Zylinder-Anordnung nach mindestens einem der vorhergehenden Ansprüche, **dadurch gekennzeichnet, dass** das Material des die Dichtungsaufnahme (7) teilweise überragenden zweite Dichtelements (8b) eine hohe Verschleißfestigkeit und/oder eine hohe Schnittfestigkeit aufweist.

8. Kolben-Zylinder-Anordnung nach mindestens einem der vorhergehenden Ansprüche, dadurch gegenzeichnet, dass das erste und das zweite Dichtelement (8a, 8b) in radialer Kolbenrichtung formschlüssig ineinandergreifen und in der Dichtungsaufnahme (7) verpresst sind.

9. Kolben-Zylinder-Anordnung nach mindestens einem der vorhergehenden Ansprüche, **dadurch gekennzeichnet, dass** der Kolben (5) federbelastet ist.

10. Kolben-Zylinder-Anordnung nach mindestens einem der vorhergehenden Ansprüche **dadurch gekennzeichnet, dass** die Kolben-Zylinder-Anordnung Bestandteil eines Kupplungs- oder Bremsaktors oder eines Dämpferbeins des Fahrzeuges ist.
